# EUROPEAN PATENT SPECIFICATION

(11) **EP 1 544 001 B1**
(45) Date of publication and mention of the grant of the patent: **14.01.2009**
(21) Application number: 04106046.8
(22) Date of filing: 24.11.2004
(51) Int. Cl.: B60C 23/04

(54) **Post patch for mounting devices inside tires**
Patch für Befestigungsvorrichtungen innerhalb von Reifen
Patch pour dispositifs de montage à l'intérieur de pneumatiques

(30) Priority: 16.12.2003 US 737642
(43) Date of publication of application: 22.06.2005
(73) Proprietor: Société de Technologie Michelin, 63000 Clermont-Ferrand (FR); Michelin Recherche et Technique S.A., 1763 Granges-Paccot (CH)
(72) Inventor: Fernerod, Pierre, W11 1DH London (GB); Metcalf, Arthur Richard, Greenville, South Carolina 29607 (US); Sinnett, Jay Clifford, Greenville, South Carolina 29615 (US)
(74) Representative: Bergmeier, Werner

(56) References cited:
- WO-A-20/04048132
- US-A1- 2002 124 934
- US-A1- 2002 174 925
- US-B1- 6 462 650

## Description

### FIELD OF THE INVENTION

The present invention generally concerns a system, method and apparatus for mounting electrical and electronic components and assemblies in a tire. The subject matter disclosed relates to mounting patches and techniques for mounting power source(s), circuit boards, and other electronic devices on so called "patch" elements within a tire.

### BACKGROUND OF THE INVENTION

The incorporation of electronic devices with and within pneumatic tire structures yields many practical advantages. Tire electronics may include sensors and other components for obtaining information regarding various physical parameters of a tire, such as temperature, pressure, number of tire revolutions, vehicle speed, revolutions at speed, revolutions at temperature, etc. Such performance information may become useful in tire monitoring and warning systems, and may even potentially be employed with feedback systems to regulate proper tire pressure levels.

One of many potential capabilities offered by electronics systems integrated with tire structures is asset tracking and performance characterization for commercial vehicular applications. Commercial truck fleets, aviation crafts and earthmover/mining vehicles are all viable industries that could utilize the benefits of tire electronic systems and related information transmission. Tire sensors can determine the distance each tire in a vehicle has traveled and thus aid in maintenance planning for such commercial systems. Vehicle location and performance can be optimized for more expensive applications such as those concerning earth-mining equipment.

In other potential tire electronics applications, RFID chips can be incorporated with a tire or wheel assembly to identify and characterize a tire over the course of its lifetime. Various sensors may also be incorporated into a tire to monitor associated tire conditions.

One important consideration associated with the incorporation of electronic devices and structures with pneumatic tires resides in the structures and techniques used to mount or attach the various electronic devices and structures to, with and within the pneumatic tire. In most instances it may be important that the electronic device be securely mounted or attached to the tire. In some instances it may be important that the electronic device not only be securely attached but also that the attachment mechanism permits the transmissions of road or surface contact vibrations. In other instances it may be important that the attachment mechanism isolate the electronic device from externally induced vibrations or other undesirable influences.

U.S. Patent 5,877,679 (Prottey) discloses a rectangular sensor attached to the inner liner of a tire by way of four pillars made of a curable adhesive material. The arrangement also includes a link member configured to be in contact with both the inner liner of the tire and the sensor. The configuration provides a mounting arrangement for the sensor such that tire rotation signals may be generated.

U.S. Patent Application Publication No. US 2002/0124934 (Koch et al.) discloses a monitoring device and patch assembly wherein the patch includes a platform portion and electronic device components are secured to the platform portion by encapsulating the electronic device components and at least a portion of the platform portion of the patch in an encapsulating material. The disclosure describes an encapsulating technique wherein the electronic device components are suspended inside a frame that is either glued to or forcibly held against a patch while an encapsulating material is poured into the frame so that the encapsulating material may flow completely around the electronic device components and thereby secure the electronic device components to the patch.

U.S. Patent No. 6,388,567 (Bohm et al) discloses a monitoring device and patch combination used to monitor the conditions of a tire. The patch portion houses an antenna and is securely mounted to the inner liner of a tire. The monitoring portion, which may be separately fabricated from the patch portion, includes sensors and other circuitry to monitor various parameters related to the tire and includes a battery fully encased with the monitoring circuitry.

Another example of a mounting arrangement for an electronic tire monitoring system can be found in U.S. Patent No. 6,309,494 (Koch et al. '494), which concerns a method of attaching electronic equipment to the inner surface of a tire. The method involves the use of an epoxy adhesive to directly bond the monitoring device to the inner surface of the inner liner of the tire.

Yet another example of a mounting arrangement for an electronic tire monitoring system can be found in U.S. Patent No. 6,255,940 (Phelan et al.), which discloses another patch and monitoring device combination. The patch portion of the combination includes a nut secured within a central portion of the patch for receiving a matching bolt The monitoring portion of the combination includes a module containing various sensors, a battery and other circuitry all encased in an epoxy and glass bead mixture. Mounted within this module is a nut, similar to the nut contained within the patch portion, such that the monitoring portion may be attached to the patch portion after the patch portion is securely attached to an inner surface of the tire.

A further example of a mounting arrangement for an electronic tire monitoring system can be found in U.S. Patent No. 6,087,930 (Kulka et al.) which discloses an active integrated circuit transponder and sensor apparatus all encased in a unitary housing. The monitoring system includes an integral battery and the entire arrangement may be inserted directly within the sidewall of a tire to be monitored or configured as a patch to be secured to an inside surface of the tire to be monitored.

Yet a further example of a mounting arrangement for an electronic tire monitoring system can be found in U.S. Patent No. 6,030,478 (Koch et al. '478), which discloses a method and apparatus permitting the insertion and removal of an electronic monitoring device from a tire. Such patent discloses a technique wherein a vulcanized rubber patch is permanently assembled to the inner liner of a tire and an electronic monitoring device, which has been encapsulated in a rigid potting material and fitted with a battery, is inserted into a cavity in the patch.

A still further example of a mounting arrangement for an electronic tire monitoring system can be found in U.S. Patent No. 6,462,650 (Balzer et al.), which discloses a rubber ply affixed to the inside surface of a tire. A retainer assembly is used to secure an electronics module to the rubber ply such that the module is support within the tire's cavity.

The disclosures of all of the foregoing United States patents and the United States patent application are hereby fully incorporated into this application for all purposes by reference thereto.

WO 2004/048132 A1 discloses a mounting arrangement for holding electronic components in a device carrier, which is located on an at least partially elastic damper foot having a circular cross section. The foot is permanently flexibly connected to the inside surface of a tire.

One concern associated with the use of tire monitoring patch and electronics combinations like those of the above-noted prior art involves the secure attachment of the combinations to the tire. As in the cases of Bohm et al., Phelan et al., Balzer et al., and Koch et al '478 noted hereinabove, a solution has been provided involving the use of a separate supporting/attachment patch and a physically separate electronics package or module. Alternatively, other solutions to the attachment problem provide unitary devices that may be directly secured to the tire as in Koch et al. '494 and Kulka et al.

A second concern associated with the use of tire monitoring patch and electronics combinations like those of the above-noted prior art is directed to use of relatively complex mechanism(s) to attach the electronics package or module to the supporting patch. The need to support relatively heavy circuitry associated with the electronics portion of the tire monitoring and electronics combination has previously required a physically robust mounting structure such as, for example, the nut and bolt arrangement of Phelan et al. or the overly complex encasement technique of the Koch et al. published application (US 2002/0124934) requiring the use of a casting frame to encase the electronic device and secure it to the patch.

Yet another concern associated with tire monitoring patch and electronics combinations relates to the fact that the patch or mounting portion of the combination must be flexible in order to adapt to the rotational movement of the tire while in use. Because of this required flexibility, care must be taken that the internal connections of the electronic circuitry are not disrupted or impaired due to continual flexing of the patch.

While various tire monitoring patch and electronics systems have been developed, no one design has emerged that generally addresses all of the above-referenced concerns and that encompasses all of the desired characteristics as hereafter presented in accordance with the subject technology.

### SUMMARY OF THE INVENTION

In view of the recognized features addressed by the present subject matter, an improved system and method for mounting devices, such as electronic components, in a tire interior has been developed. Generally, a modular mounting assembly includes an integrated combination of a patch assembly and a tag assembly.

Various features and aspects of the subject modular mounting assemblies and tire electronics applications offer a plurality of advantages. The disclosed modular mounting assembly is provided with significant design versatility since the patch mounting portion can be used to mount a plurality of different devices. Exemplary electronic devices may include such components as condition-responsive devices including transducers, acoustic devices, sensors, etc. for sensing certain environmental conditions such as temperature and/or pressure, tire revolution counters, vehicle speed sensors, sidewall deflection sensors, tire displacement sensors, microprocessors, memory modules, RFID transponders, light assemblies, data transmitters and/or receivers, and power supply components.

Another advantage in accordance with certain embodiments of the present technology lies in providing improved technology for mounting an electronic device on the inside of a tire while decoupling the electronic device from the mechanical stress, vibration, and heat generation associated with the rotation of the tire.

Yet another advantage in accordance with certain embodiments of the presently disclosed technology is that techniques are provided for simplifying the attachment of the electronics portion of the electronics device to the mounting patch. This corresponds in one exemplary embodiment to gluing an encapsulated "tag" assembly directly to a portion of the mounting post followed by encapsulation of the glued, encapsulated tag assembly and a portion of the mounting post. In another exemplary embodiment, an electronic device is potted into a rigid housing that is then directly glued to a portion of the mounting post.

A still further advantage of certain embodiments of the present subject matter is that improved bonding of the tire electronics system is facilitated by providing contoured platforms to fit within the contour of the tag assembly. This corresponds in one exemplary embodiment to the provision of a post platform having an outer contour shaped like the footprint of the tag assembly.

Yet a further advantage of certain embodiments of the present subject matter is that certain vibration transmission modes are suppressed. In one exemplary embodiment of the presently disclosed technology this corresponds to the provision of specifically shaped posts connecting the electronic device supporting platform to the tire inner liner attachment portion of the mounting patch.

Other exemplary embodiments of the present subject matter correspond to a tire assembly including a pneumatic tire and a combined mounting patch and electronics assembly such as referenced above, wherein the mounting patch and electronics assembly is mounted on an inner liner location of the pneumatic tire. Exemplary such locations within the tire may correspond to the internal crown or sidewall locations.

### BRIEF DESCRIPTION OF THE DRAWINGS

A full and enabling disclosure of the present subject matter, including the best mode thereof, directed to one of ordinary skill in the art, is set forth in the specification, which makes reference to the appended figures, in which:
- **Figure 1**: displays a side view of an exemplary tire patch structure (for illustrative purposes only) ;
- **Figure 2**: displays a top plan view of the exemplary embodiment of the tire patch structure such as illustrated in Figure 1;
- **Figure 3**: displays a side view of a first exemplary patch assembly embodiment including a tire patch structure (such as illustrated in Figures 1 and 2) with a fag assembly secured thereto;
- **Figure 4**: displays a side cross-sectional view of an encapsulated tag assembly in accordance with the present subject matter;
- **Figure 5**: displays a side cross-sectional view of an alternative patch assembly embodiment illustrating an exemplary technique for mounting of a tag assembly to a tire patch structure (such as illustrated in Figure 1);
- **Figure 6**: displays a side cross-sectional view of another alternative patch assembly embodiment illustrating an alternative exemplary technique for mounting a tag assembly to a tire patch structure (such as illustrated in Figure 1);
- **Figure 7**: displays a side view of an exemplary patch assembly embodiment in accordance with the present subject matter;
- **Figure 8**: displays a top plan view of the patch assembly embodiment illustrated in Figure 7; and
- **Figure 9**: displays a cross section of an exemplary pneumatic tire, illustrating alternative mounting locations for the subject patch assemblies.

Repeat use of reference characters throughout the present specification and appended drawings is intended to represent same or analogous features or elements of the invention.

### DETAILED DESCRIPTION OF THE PREFERRED EMBODIMENTS

Reference will now be made in detail to the presently preferred embodiments of the subject matter comprising an improved patch assembly system and method for mounting an electronics assembly within a tire structure. Selected combinations of the aforementioned aspects of the disclosed technology correspond to a plurality of different embodiments of the present subject matter. It should be noted that each of the exemplary embodiments presented and discussed herein should not insinuate limitations of the present subject matter. Features or steps illustrated or described as part of one embodiment may be used in combination with aspects of another embodiment to yield yet further embodiments. Additionally, certain features may be interchanged with similar devices or features not expressly mentioned which perform the same or similar function. Similarly, certain process steps may be interchanged or employed in combination with other steps to yield additional exemplary embodiments of a method for mounting a patch assembly to the interior lining of a tire.

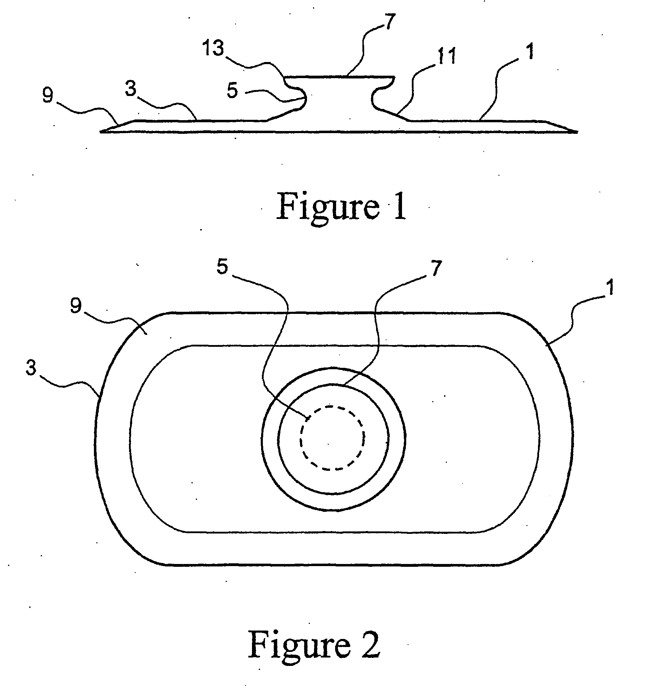

With particular reference to Figs. 1 and 2, there are illustrated, respectively, side and top views of a not-claimed embodiment of a tire patch 1. The tire patch 1 is composed of a vulcanized rubber compound and comprises three major components: a base 3 for attachment to the inner liner of a tire, a platform 7 for supporting variously selected electronic components, and a pillar 5 for coupling the base 3 to the platform 7 and providing at least partial isolation or decoupling of any electronic devices which may be mounted on the platform 7 from road and tire induced conditions that may adversely effect electronic devices supported by tire patch 1. In addition to these three major components, several other features of tire patch 1 are significant. Edges 9 of the base 3 may be feathered to avoid stress concentration around the perimeter of the base. The generally oval shape of the base 3, as best seen in Fig. 2, also assists in avoiding stress concentration. The base 3 is relatively thin to allow for bending of the base portion as the tire in which the tire patch 1 may be mounted flattens when it comes in contact with the ground or road surface. A tapered profile 11 is provided for the transition area from the base 3 of the tire patch 1 to the pillar 5 so as to uniformly distribute any stress propagating between any electronic device that may be mounted on the platform 7 and the tire inner liner to which the base 3 may be attached. The pillar 5 is necked down, as best seen in Fig. 1, to an optimum width to support any electronic device that may be mounted on the platform 7. Such configuration also helps to ensure that not too much strain is transmitted through the pillar 5 to the base 3 and, from there, to the inner liner of a tire. Finally, as illustrated in Fig. 1, the edges 13 of the platform are flared to avoid stress concentration at the edge of the platform 7 in a manner similar to the feathering of the edges 9 of the base portion of the tire patch 1. The platform 7 per se is provided with a generally flat, circular shape (as seen in Figs. 1 and 2) so as to provide a flat surface for bonding to an electronic module which may be positioned on top of the platform 7 and a circular shape so as to provide optimum strength in all directions. Generally, the tire patch 1 is designed to take the maximum force (centrifugal and inertial) generated by any electronic device which may be secured to the platform 7 and distribute the force to a sufficient area of a tire inner liner so as to prevent any damage to the tire and to assure good adhesion of the tire patch 1 to a tire inner liner using available rubber-to-rubber bonding techniques.

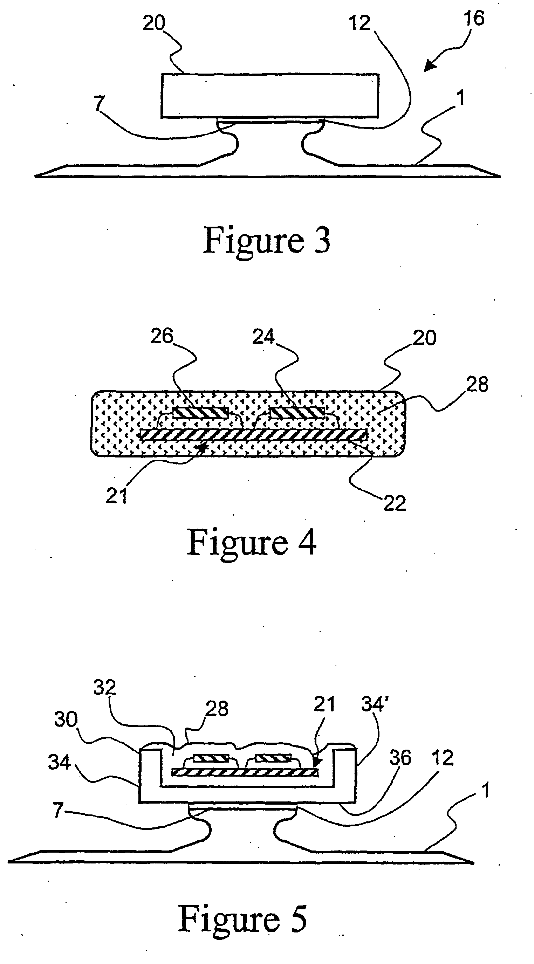

With reference to Fig. 3, there is illustrated an encapsulated tag assembly 20, as will presently be more fully described, secured to the mounting platform 7 of tire patch 1. Such integrated combination of tag assembly 20 and tire patch 1 yields an exemplary patch assembly 16.

The tag assembly 20 of patch assembly 16 will now be more fully described with reference to Fig. 4. Tag assembly 20 consists of an electronic device 21 that may be composed of a circuit board 22 on which a plurality of circuit elements 24, 26 may be mounted. The electronic device monitors the tire by collecting, storing and/or reading at least one engineering condition of the tire. As illustrated, circuit elements 24, 26 are intended to representatively illustrate any number (i.e., more or less that the two representatively illustrated components) of a large variety of electrical components, which components may include sensors of various types and other electronic components including, but not limited to, microprocessors, memory elements, power supplies including one or more batteries, transmitter and receiver devices, antenna elements and other similar components. Sensors may include, but ate not limited to, elements and devices for sensing temperature, pressure, tire rotation, and other engineering conditions of the tire in which the tag assembly is mounted The tag assembly may be designed to monitor the tire in which it is mounted by collecting and storing for later retrieval, any type of tire related engineering data desired and/or other types of tire related data as, for example, manufacturing data including serial number, manufacturing time, date and location, or any other type of relevant data desired to be associated with the particular tire. Following placement of the representatively illustrated components 24, 26 on the printed circuit board 22, the thusly-formed electronic device 21 is encapsulated in a suitable rigid potting material 28 or protected with a conformal coating material to produce the tag assembly 20. The electronic device 21 may be encapsulated by placing the completed device in a half mould and then filling the half mould with potting material such that the potting material fills the mould and flows around the electronic device 21. ter the potting material has dried, the half mould may be removed to yield a rigid tag assembly 20 that may then be glued with an adhesive layer 12 directly to the platform 7 of tire patch 1 as illustrated in Fig. 3.

An alternative technique for securing the electronic device 21 is illustrated in Fig. 5. As illustrated in Fig. 5, a rigid housing 30 may be provided fitting with the contour of the electronic device 21. The rigid housing 30 takes the form of a rigid half shell made up of a closed bottom or lower portion 36, side walls 34, 34' and an open upper portion 32. It will be appreciated that, although only two side walls are designated in Fig. 5, there are, in fact, four such walls completing the structure. The electronic device 21 may then be potted into the rigid housing 30 by filling the rigid housing 30 with a potting material 28 that fills the rigid housing 30 and flows around the electronic device 21. After the potting material 28 has dried, a rigid tag assembly having at least one side made of potting material and other sides a rigid housing is produced which may then be secured to the tire patch 1 by bonding one side of the rigid housing 30 to the platform 7 of the tire patch 1 using an adhesive layer 12. The sequence of assembling the electronic device 21 to the platform 7 of the tire patch 1 may be performed either before or after the tire patch 1 is attached to the inner liner of a tire. In addition, the rigid housing 30 may first be affixed to the platform 7 by way of adhesive layer 12 followed by encapsulation of the electronic device 21 into the rigid housing 30 by potting material 28.

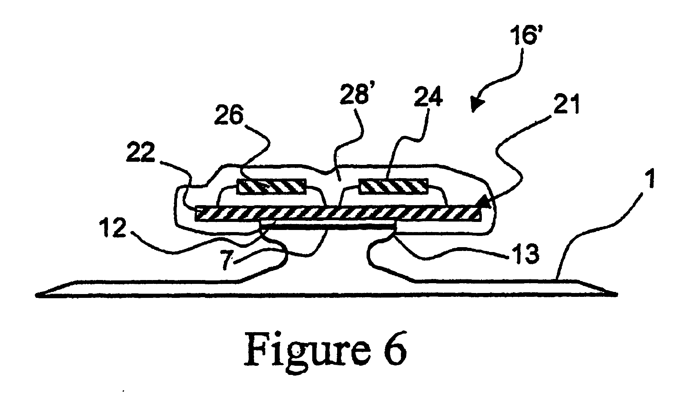

Yet another alternative technique for securing the electronic device 21 to the platform 7 of a tire patch 1 is illustrated in Fig. 6. As illustrated in Fig. 6, the printed circuit board 22 of the electronic device 21 has an upper side fitted with representatively illustrated electronic components 24, 26 and a bottom side. The bottom side of the circuit board 22 is directly bonded to the platform 7 of the tire patch 1 by applying a suitable adhesive 12 between the bottom side of circuit board 22 and the flat rubber platform 7. The circuit board 22 may then be pressed onto the flat rubber platform 7. After bonding the electronic device 21 to the platform 7, the bonded electronic device 21 is covered with a varnish or conformal coating material 28' that may be composed of a composition similar to the encapsulating or potting material 28 previously described. As can be seen from the illustration in Fig. 6, the coating material 28' is arranged to not only completely cover the electronic device 21 including the circuit board 22 and all components 24, 26, but also to cover at least a portion of the flared edges 13 of the platform 7. The resultant patch assembly 16' of Fig. 6 may then be secured to the inner liner of a tire using any suitable technique. As with the arrangement illustrated in Fig. 5, the sequence of assembling the electronic device 21 to the platform 7 of the tire patch 1 may be performed either before or after the tire patch 1 is attached to the inner liner of a tire.

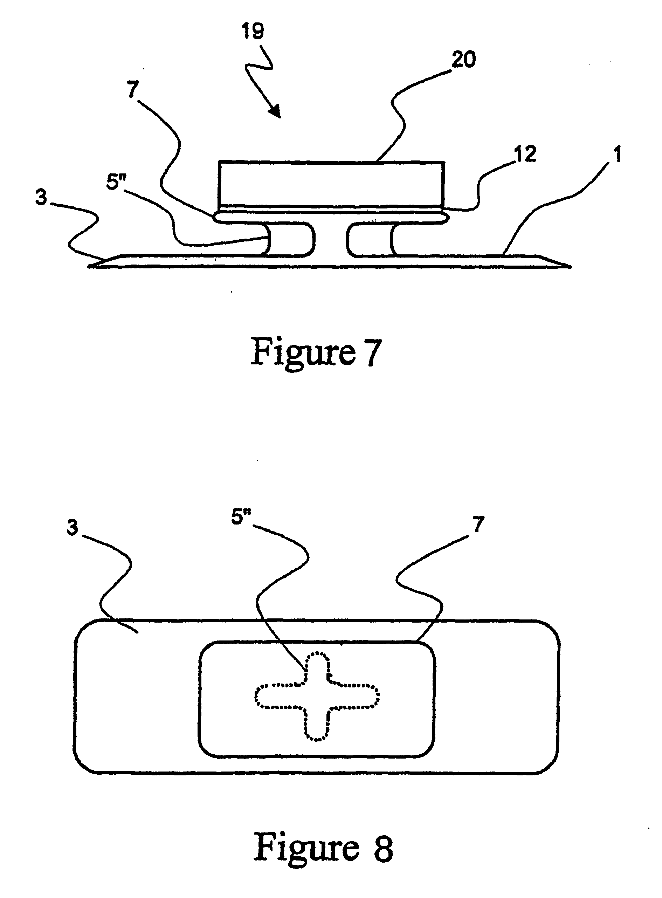

A patch assembly embodiment 19 according to the invention is illustrated in Figs. 7 and 8. The tire patch 1 illustrated in Figs. 7 and 8 retains all of the features previously illustrated except for the pillar. In this embodiment, the pillar 5" has an outer contour shaped like a cross. It has been found that this cross-shaped contour provides a higher level of rejection of some frequency modes, thus providing improved decoupling of any electronic device 20 which may be affixed to the platform 7 from stress and vibration transmitted to the electronic device 20 from the tire as it comes into contact with a traveled surface.

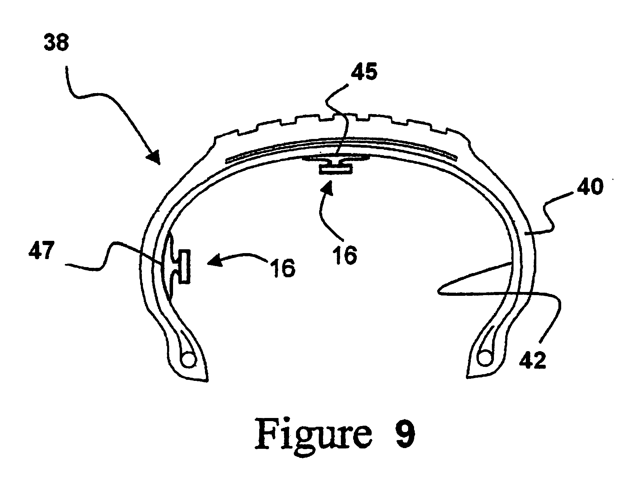

Now with reference to Fig. 9, an exemplary tire assembly embodiment 38 of the present invention is illustrated wherein a patch assembly 16 is mounted within a pneumatic tire 40. Although reference numeral 16 is used here to represent the exemplary patch assembly integrated with pneumatic tire 40, it should be appreciated that any specific patch assembly, including exemplary embodiments 16, 16', and 19, may be utilized. As shown in Fig. 9, tire 40 includes an inner liner 42. The patch assembly 16 disclosed herein may be mounted at various locations within the pneumatic tire; two of these locations are illustrated at the crown portion 45 of the tire and near the sidewall portion 47. As will be appreciated by those of ordinary skill in the art, the patch assembly 16 may be mounted at any convenient location on the inner liner of the tire, the two locations shown merely being exemplary of such possible mounting locations.

The tag assembly 20 illustratively attached to the tire patch 1 in Fig. 7 might be replaced by the rigid housing 30 configuration illustrated in Fig. 5 or the directly bonded and encapsulated electronic device 21 as illustrated in Fig. 6.

## Claims

1. A tire patch for mounting devices inside a tire comprising:
a base portion (3) having an upper portion and a lower portion, the lower portion being configured to be attached to an inner surface of a tire;
a platform portion (7) having an upper portion and a lower portion, the upper portion being substantially flat and configured as a device mounting surface; and
a pillar portion (5") having an upper portion and a lower portion, the upper portion connected to the lower portion of the platform portion (7) and the lower portion connected to the upper portion of the base portion (3), whereby the tire patch (1) is configured to decouple selected tire related phenomena from any device which may be attached to the upper portion of the platform (7),
**characterized in that** the platform portion (7) and the base portion (3) each have rectangular cross-sections and that the pillar portion (5") has a cross-shaped cross-section.

2. The tire patch of claim 1, wherein the base portion (3) is generally rectangular with two relatively longer substantially parallel sides and two relatively shorter rounded sides.

3. The tire patch of claim 1, wherein the base portion (3) has peripheral edges (9) that are feathered from the upper portion of the base portion (3).

4. A patch assembly for mounting inside a tire comprising:
a base portion (3) having an upper portion and a lower portion, the lower portion being configured to be attached to an inner surface of a tire;
a platform portion (7) having an upper portion and a lower portion, the upper portion being substantially flat and configured as a device mounting surface;
a pillar portion (5") having an upper portion and a lower portion, the upper portion connected to the lower portion of the platform portion (7) and the lower portion connected to the upper portion of the base portion (3); and
a device secured to the upper portion of the platform portion (7), whereby the device may be decoupled from selected tire related phenomena,
**characterized in that** the platform portion (7) and the base portion (3) each have generally rectangular cross-sections and that the pillar portion (5") has a cross-shaped cross-section.

5. The patch assembly of claim 4, wherein the base portion (3) is generally rectangular with two relatively longer substantially parallel sides and two relatively shorter oval shaped ends.

6. The patch assembly of claim 4, wherein the base portion (3) has peripheral edges (9) that are feathered from the upper portion of the base portion (3).

7. The patch assembly of claim 4, wherein the device comprises:
a circuit board (22) having upper and lower portions;
at least one selected electrical component (24, 26) secured to the upper portion of the circuit board (22); and
a conformal coating material (28, 28') encasing the circuit board (22) and all electrical components (24, 26) secured thereto.

8. The patch assembly of claim 7, wherein the conformal coating material (28, 28') is a rigid potting material (28) and the device is adhesively bonded to the upper portion of the platform (7).

9. The patch assembly of claim 8, wherein the contour of the platform portion (7) corresponds to the contour of the device.

10. The patch assembly of claim 4, wherein the device comprises:
a rigid half shell (30) having an open upper portion (32), side portions (34, 34') and a closed lower portion (36);
a circuit board (22) having an upper portion and a lower portion and at least one selected electrical component (24, 26) secured to the upper portion of the circuit board (22), said circuit board (22) positioned within the rigid half shell (30); and
a conformal coating material (28, 28') sealing said circuit board (22) and said at least one selected electrical component (24, 26) within the rigid half shell (30);
wherein the lower portion (36) of the rigid half shell (30) is adhesively bonded to the upper portion of the platform portion (7) of the tire patch (1).

11. A tire assembly with integrated devices, comprising:
a pneumatic tire;
a tire patch (1) comprising:
a base portion (3) having an upper portion and a lower portion, the lower portion being attached to an inner surface of said pneumatic tire;
a platform portion (7) having an upper portion and a lower portion, the upper portion being substantially flat and configured as a device mounting surface; and
a pillar portion (5") having an upper portion and a lower portion, the upper portion connected to the lower portion of the platform portion (7) and the lower portion connected to the upper portion of the base portion (3); and
a device, said device secured to the upper portion of the platform portion (7) of said tire patch (1), whereby the device may be decoupled from selected tire related phenomena.
**characterized in that** the base portion (3) is generally rectangular with two relatively longer substantially parallel sides and two relatively shorter rounded ends and that the pillar portion (5") has a rectangular cross-section.

12. The tire assembly of claim 11, wherein the base portion (3) has peripheral edges (9) that are feathered from the upper portion of the base portion (3).

13. The tire assembly of claim 11, wherein the device comprises:
a circuit board (22) having an upper portion and a lower portion; and
at least one selected electrical component (24, 26) secured to the upper portion of the circuit board (22), wherein the lower portion of the circuit board (22) is adhesively bonded to the upper portion of the platform portion (7) of the tire patch (1).

14. The tire assembly of claim 13, further comprising a conformal coating material (28, 28') covering the upper portion of the circuit board (22), all electrical components (24, 26) secured thereto, and at least a portion of the lower portion of the platform portion (7) thereby forming a sealed encapsulation of the device.

15. The tire assembly of claim 11, wherein the device comprises:
a circuit board (22) having upper and lower portions;
at least one selected electrical component (24, 26) secured to the upper portion of the circuit board (22); and
a conformal coating material (28, 28') encasing the circuit board (22) and all electrical components (24, 26) secured thereto.

16. The tire assembly of claim 15, wherein the conformal coating material (28, 28') is a rigid potting material (28) and the device is adhesively bonded to the upper portion of the platform (7).

17. The tire assembly of claim 16, wherein the contour of the platform portion (7) corresponds to the contour of the device.

18. A method of mounting a device inside a tire comprising the steps of:
providing a tire;
providing a device;
providing a tire patch (1) having a platform portion (7) with a flat upper surface and a lower surface, a base portion (3) with a flat lower surface and an upper surface and a pillar portion (5") with an upper portion and a lower portion connecting the platform portion (7) to the base portion (3) and configured to decouple selected tire related phenomena from the platform (7);
attaching the device to the upper surface of the platform portion (7) of the tire patch (1); and
attaching the lower surface of the base portion (3) of the tire patch (1) to an inner surface of the tire
**characterized in that** the step of providing a tire patch (1) includes providing the platform portion (7) and the base portion (3) each with generally rectangular cross-sections and that the step of providing a tire patch (1) includes providing the pillar portion (5") with a cross-shaped cross-section.

19. The method of claim 18, wherein the step of providing a tire patch (1) includes providing the base portion (3) with a generally rectangular cross-section with two relatively longer substantially parallel sides and two relatively shorter oval shaped ends.

20. The method of claim 18, wherein the step of providing a tire patch (1) includes providing the base portion (3) with peripheral edges (9) that are feathered from the upper portion of the base portion (3).

21. The method of claim 18, wherein the step of providing a device comprises the steps of:
providing a circuit board (22) having an upper portion and a lower portion; and
securing at least one selected electrical component (24, 26) to the upper portion of the circuit board (22).

22. The method of claim 21, wherein the step of attaching the device comprises the step of adhesively bonding the lower portion of the circuit board (22) to the upper portion of the platform portion (7) of the tire patch (1).

23. The method of claim 22, wherein the step of attaching the device further includes the step of applying a conformal coating material (28, 28') to the circuit board (22), all secured electrical components (24, 26) and at least a portion of the lower side of the platform (7).

24. The method of claim 21, wherein the step of providing a device further comprises the step of applying a conformal coating material (28, 28') covering the upper portion of the circuit board (22), all electrical components (24, 26) secured thereto, and the lower portion of the circuit board (22).

25. The method of claim 18, wherein the step of providing a device comprises the steps of:
providing a rigid half shell (30) having an open upper portion (32), side portions (34, 34') and a closed lower portion (36);
providing a circuit board (22) having an upper portion and a lower portion and at least one selected electrical component (24, 26) secured to the upper portion of the circuit board (22);
positioning said circuit board (22) within the rigid half shell (30); and applying a conformal coating material (28, 28') sealing said circuit board (22) and said at least one selected electrical component (24, 26) within the rigid half shell (30).

26. The method of claim 18, wherein the step of attaching the device to the upper surface of the platform (7) precedes the step of attaching the lower surface of the base portion (3) of the tire patch (1) to an inner surface of the tire.

27. The method of claim 18, wherein the step of attaching the lower surface of the base portion (3) of the tire patch (1) to an inner surface of the tire precedes the step of attaching the device to the base portion (3) of the tire patch (1).

## Patentansprüche

1. Reifen-Ansetzstück zum Montieren von Vorrichtungen in einem Reifen, umfassend:
einen Basisabschnitt (3), welcher einen oberen Abschnitt und einen unteren Abschnitt aufweist, wobei der untere Abschnitt geeignet gestaltet ist, um an einer inneren Oberfläche eines Reifens befestigt zu werden;
einen Plattformabschnitt (7), welcher einen oberen Abschnitt und einen unteren Abschnitt aufweist, wobei der obere Abschnitt im wesentlichen eben ist und als Vorrichtungsmontagefläche ausgestaltet ist; und
einen Säulenabschnitt (5"), welcher einen oberen Abschnitt und einen unteren Abschnitt aufweist, wobei der obere Abschnitt mit dem unteren Abschnitt des Plattformabschnitts (7) verbunden ist und der untere Abschnitt mit dem oberen Abschnitt des Basisabschnitts (3) verbunden ist, wodurch das Reifen-Ansetzstück (1) geeignet eingerichtet ist, um ausgewählte reifenbezügliche Phänomene von einer Vorrichtung, welche an dem oberen Abschnitt der Plattform (7) befestigt werden kann, zu entkoppeln,
**dadurch gekennzeichnet, dass** der Plattformabschnitt (7) und der Basisabschnitt (3) jeweils rechteckige Querschnitte aufweisen und dass der Säulenabschnitt (5") einen kreuzförmigen Querschnitt aufweist.

2. Reifen-Ansetzstück nach Anspruch 1, wobei der Basisabschnitt (3) generell rechteckig ist, mit zwei relativ längeren im wesentlichen parallelen Seiten und zwei relativ kürzeren gerundeten Seiten.

3. Reifen-Ansetzstück nach Anspruch 1, wobei der Basisabschnitt (3) Umfangskanten (9) aufweist, welche von dem oberen Abschnitt des Basisabschnitts (3) ausgehend abgeschrägt sind.

4. Ansetzstückanordnung zur Montage in einem Reifen, umfassend:
einen Basisabschnitt (3), welcher einen oberen Abschnitt und einen unteren Abschnitt aufweist, wobei der untere Abschnitt geeignet gestaltet ist, um an einer inneren Oberfläche eines Reifens befestigt zu werden;
einen Plattformabschnitt (7), welcher einen oberen Abschnitt und einen unteren Abschnitt aufweist, wobei der obere Abschnitt im wesentlichen eben ist und als Vorrichtungsmontagefläche ausgestaltet ist;
einen Säulenabschnitt (5"), welcher einen oberen Abschnitt und einen unteren Abschnitt aufweist, wobei der obere Abschnitt mit dem unteren Abschnitt des Plattformabschnitts (7) verbunden ist und der untere Abschnitt mit dem oberen Abschnitt des Basisabschnitts (3) verbunden ist; und
eine Vorrichtung, welche an dem oberen Abschnitt des Plattformabschnitts (7) befestigt ist, wodurch die Vorrichtung von ausgewählten reifenbezüglichen Phänomenen entkoppelt werden kann,
**dadurch gekennzeichnet, dass** der Plattformabschnitt (7) und der Basisabschnitt (3) jeweils rechteckige Querschnitte aufweisen und dass der Säulenabschnitt (5") einen kreuzförmigen Querschnitt aufweist.

5. Ansetzstückanordnung nach Anspruch 4, wobei der Basisabschnitt (3) generell rechteckig ist, mit zwei relativ längeren im wesentlichen parallelen Seiten und zwei relativ kürzeren ovalförmigen Enden.

6. Ansetzstückanordnung nach Anspruch 4, wobei der Basisabschnitt (3) Umfangskanten (9) aufweist, welche von dem oberen Abschnitt des Basisabschnitts (3) ausgehend abgeschrägt sind.

7. Ansetzstückanordnung nach Anspruch 4, wobei die Vorrichtung umfasst:
eine Leiterplatte (22), welche einen oberen und einen unteren Abschnitt aufweist;
mindestens ein ausgewähltes elektrisches Element (24, 26), welches an dem oberen Abschnitt der Leiterplatte (22) befestigt ist; und
ein angepasstes Ummantelungsmaterial (28, 28'), welches die Leiterplatte (22) und sämtliche elektrischen Elemente (24, 26), welche daran befestigt sind, umschließt.

8. Ansetzstückanordnung nach Anspruch 7, wobei das angepasste Ummantelungsmaterial (28, 28') eine starre Vergussmasse (28) ist und die Vorrichtung an dem oberen Abschnitt der Plattform (7) angeklebt ist.

9. Ansetzstückanordnung nach Anspruch 8, wobei das Konturprofil des Plattformabschnitts (7) mit dem Konturprofil der Vorrichtung übereinstimmt.

10. Ansetzstückanordnung nach Anspruch 4, wobei die Vorrichtung umfasst:
eine starre Halbschale (30), welche einen oberen Abschnitt (32), Seitenabschnitte (34, 34') und einen geschlossenen unteren Abschnitt (36) aufweist;
eine Leiterplatte (22), welche einen oberen und einen unteren Abschnitt aufweist, und mindestens ein ausgewähltes elektrisches Element (24, 26), welches an dem oberen Abschnitt der Leiterplatte (22) befestigt ist, wobei die Leiterplatte (22) in der starren Halbschale (30) angeordnet ist; und
ein angepasstes Ummantelungsmaterial (28, 28'), welches die Leiterplatte (22) und das mindestens eine ausgewählte elektrische Element (24, 26) in der starren Halbschale versiegelt;
wobei der untere Abschnitt (36) der starren Halbschale (30) an dem oberen Abschnitt des Plattformabschnitts (7) des Reifen-Ansetzstückes (1) angeklebt ist.

11. Reifenanordnung mit integrierten Vorrichtungen, umfassend:
einen Druckluftreifen;
ein Reifen-Ansetzstück (1), umfassend:
einen Basisabschnitt (3), welcher einen oberen Abschnitt und einen unteren Abschnitt aufweist, wobei der untere Abschnitt an einer inneren Oberfläche des Druckluftreifens befestigt ist;
einen Plattformabschnitt (7), welcher einen oberen Abschnitt und einen unteren Abschnitt aufweist, wobei der obere Abschnitt im wesentlichen eben ist und als Vorrichtungsmontagefläche angelegt ist; und
einen Säulenabschnitt (5"), welcher einen oberen Abschnitt und einen unteren Abschnitt aufweist, wobei der obere Abschnitt mit dem unteren Abschnitt des Plattformabschnitts (7) verbunden ist und der untere Abschnitt mit dem oberen Abschnitt des Basisabschnitts (3) verbunden ist; und
eine Vorrichtung, wobei die Vorrichtung an dem oberen Abschnitt des Plattformabschnitts (7) des Reifen-Ansetzstückes (1) befestigt ist, wodurch die Vorrichtung von ausgewählten reifenbezüglichen Phänomenen entkoppelt werden kann,
**dadurch gekennzeichnet, dass** der Basisabschnitt (3) generell rechteckig ist, mit zwei relativ längeren im wesentlichen parallelen Seiten und zwei relativ kürzeren gerundeten Enden, und dass der Säulenabschnitt (5") einen rechteckigen Querschnitt aufweist.

12. Reifenanordnung nach Anspruch 11, wobei der Basisabschnitt (3) Umfangskanten (9) aufweist, welche von dem oberen Abschnitt des Basisabschnitts (3) ausgehend abgeschrägt sind.

13. Reifenanordnung nach Anspruch 11, wobei die Vorrichtung umfasst:
eine Leiterplatte (22), welche einen oberen Abschnitt und einen unteren Abschnitt aufweist; und
mindestens ein ausgewähltes elektrisches Element (24, 26), welches an dem oberen Abschnitt der Leiterplatte (22) befestigt ist, wobei der untere Abschnitt der Leiterplatte (22) an dem oberen Abschnitt des Plattformabschnitts (7) des Reifen-Ansetzstückes (1) angeklebt ist.

14. Reifenanordnung nach Anspruch 13, ferner umfassend ein angepasstes Ummantelungsmaterial (28, 28'), welches den oberen Abschnitt der Leiterplatte (22), sämtliche elektrischen Elemente (24, 26), welche daran befestigt sind, und mindestens einen Abschnitt des unteren Abschnitts des Plattformabschnitts (7) bedeckt, wodurch ein versiegelter Einschluss der Vorrichtung ausgebildet wird.

15. Reifenanordnung nach Anspruch 11, wobei die Vorrichtung umfasst:
eine Leiterplatte (22), welche einen oberen und einen unteren Abschnitt aufweist;
mindestens ein ausgewähltes elektrisches Element (24, 26), welches an dem oberen Abschnitt der Leiterplatte (22) befestigt ist; und
ein angepasstes Ummantelungsmaterial (28, 28'), welches die Leiterplatte (22) und sämtliche elektrischen Elemente (24, 26), welche daran befestigt sind, umschließt.

16. Reifenanordnung nach Anspruch 15, wobei das angepasste Ummantelungsmaterial (28, 28') eine starre Vergussmasse (28) ist und die Vorrichtung an dem oberen Abschnitt der Plattform (7) angeklebt ist.

17. Reifenanordnung nach Anspruch 16, wobei das Konturprofil des Plattformabschnitts (7) mit dem Konturprofil der Vorrichtung übereinstimmt.

18. Verfahren zum Montieren einer Vorrichtung in einem Reifen, umfassend die Schritte:
Bereitstellen eines Reifens;
Bereitstellen einer Vorrichtung;
Bereitstellen eines Reifen-Ansetzstückes (1), welches einen Plattformabschnitt (7) mit einer ebenen oberen Oberfläche und einer unteren Oberfläche, einen Basisabschnitt (3) mit einer ebenen unteren Oberfläche und einer oberen Oberfläche und einen Säulenabschnitt (5") mit einem oberen Abschnitt und einem unteren Abschnitt, welcher den Plattformabschnitt (7) mit dem Basisabschnitt verbindet und geeignet eingerichtet ist, um ausgewählte reifenbezügliche Phänomene von der Plattform (7) zu entkoppeln, aufweist;
Befestigen der Vorrichtung an der oberen Oberfläche des Plattformabschnitts (7) des Reifen-Ansetzstückes (1); und
Befestigen der unteren Oberfläche des Basisabschnitts (3) des Reifen-Ansetzstückes (1) an einer inneren Oberfläche des Reifens,
**dadurch gekennzeichnet, dass** der Schritt des Bereitstellens eines Reifen-Ansetzstückes (1) das Bereitstellen des Plattformabschnitts (7) und des Basisabschnitts (3), welche jeweils generell rechteckige Querschnitte aufweisen, umfasst und dass der Schritt des Bereitstellens eines Reifen-Ansetzstückes (1) das Bereitstellen des Säulenabschnitts (5") mit einem kreuzförmigen Querschnitt umfasst.

19. Verfahren nach Anspruch 18, wobei der Schritt des Bereitstellens eines Reifen-Ansetzstückes (1) das Bereitstellen des Basisabschnitts (3) mit einem generell rechteckigen Querschnitt mit zwei relativ längeren im wesentlichen parallelen Seiten und zwei relativ kürzeren ovalförmigen Enden umfasst.

20. Verfahren nach Anspruch 18, wobei der Schritt des Bereitstellens eines Reifen-Ansetzstückes (1) das Bereitstellen des Basisabschnitts (3) mit Umfangskanten (9), welche von dem oberen Abschnitt des Basisabschnitts (3) ausgehend abgeschrägt sind, umfasst.

21. Verfahren nach Anspruch 18, wobei der Schritt des Bereitstellens einer Vorrichtung die Schritte umfasst:
Bereitstellen einer Leiterplatte (22), welche einen oberen Abschnitt und einen unteren Abschnitt aufweist; und
Befestigen mindestens eines ausgewählten elektrischen Elements (24, 26) an dem oberen Abschnitt der Leiterplatte (22).

22. Verfahren nach Anspruch 21, wobei der Schritt des Befestigens der Vorrichtung den Schritt des Anklebens des unteren Abschnitts der Leiterplatte (22) an dem oberen Abschnitt des Plattformabschnitts (7) des Reifen-Ansetzstückes (1) umfasst.

23. Verfahren nach Anspruch 22, wobei der Schritt des Befestigens der Vorrichtung ferner den Schritt des Aufbringens eines angepassten Ummantelungsmaterials (28, 28') auf der Leiterplatte (22), sämtlichen befestigten elektrischen Elementen (24, 26) und mindestens einem Abschnitt der unteren Seite der Plattform (7) umfasst.

24. Verfahren nach Anspruch 21, wobei der Schritt des Befestigens der Vorrichtung ferner den Schritt des Aufbringens eines angepassten Ummantelungsmaterials (28, 28'), welches den oberen Abschnitt der Leiterplatte (22), sämtliche elektrischen Elemente (24, 26), welche daran befestigt sind, und den unteren Abschnitt der Leiterplatte (22) bedeckt, umfasst.

25. Verfahren nach Anspruch 18, wobei der Schritt des Bereitstellens einer Vorrichtung die Schritte umfasst:
Bereitstellen einer starren Halbschale (30), welche einen offenen oberen Abschnitt (32), Seitenabschnitte (34, 34') und einen geschlossenen unteren Abschnitt (36) aufweist;
Bereitstellen einer Leiterplatte (22), welche einen oberen Abschnitt und einen unteren Abschnitt aufweist, und mindestens eines ausgewählten elektrischen Elements (24, 26), welches an dem oberen Abschnitt der Leiterplatte (22) befestigt ist;
Anordnen der Leiterplatte (22) in der starren Halbschale (30); und
Aufbringen eines angepassten Ummantelungsmaterials (28, 28'), welches die Leiterplatte (22) und das mindestens eine elektrische Element (24, 26) in der starren Halbschale (30) versiegelt.

26. Verfahren nach Anspruch 18, wobei der Schritt des Befestigens der Vorrichtung an der oberen Oberfläche der Plattform (7) dem Schritt des Befestigens der unteren Oberfläche des Basisabschnitts (3) des Reifen-Ansetzstückes (1) an einer inneren Oberfläche des Reifens vorangeht.

27. Verfahren nach Anspruch 18, wobei der Schritt des Befestigens der unteren Oberfläche des Basisabschnitts (3) des Reifen-Ansetzstückes (1) an einer inneren Oberfläche des Reifens dem Schritt des Befestigens der Vorrichtung an dem Basisabschnitt (3) des Reifen-Ansetzstückes (1) vorangeht.

## Revendications

1. Pastille de pneumatique destinée au montage de dispositifs à l'intérieur d'un pneumatique, comprenant :
un élément de base (3) ayant un élément supérieur et un élément inférieur, l'élément inférieur étant configuré pour être fixé à une surface interne d'un pneumatique ;
un élément de plate-forme (7) ayant un élément supérieur et élément inférieur, l'élément supérieur étant sensiblement plat et configuré comme une surface de montage pour un dispositif ; et
un élément de pilier (5") ayant un élément supérieur et un élément inférieur, l'élément supérieur étant connecté à l'élément inférieur de l'élément de plate-forme (7) et l'élément inférieur étant connecté à l'élément supérieur de l'élément de base (3), dans laquelle la pastille de pneumatique (1) est configurée pour découpler des phénomènes sélectionnés relatifs au pneumatique de tout dispositif qui peut être fixé à l'élément supérieur de la plate-forme (7),
**caractérisée en ce que** l'élément de plate-forme (7) et l'élément de base (3) présentent chacun des sections transversales rectangulaires et **en ce que** l'élément de pilier (5") présente une section transversale cruciforme.

2. Pastille de pneumatique selon la revendication 1, dans laquelle l'élément de base (3) est généralement rectangulaire, avec deux côtés sensiblement parallèles plus longs et deux côtés arrondis plus courts.

3. Pastille de pneumatique selon la revendication 1, dans laquelle l'élément de base (3) présente des bords extérieurs (9) biseautés à partir de l'élément supérieur de l'élément de base (3).

4. Assemblage de pastille destiné à être monté à l'intérieur d'un pneumatique, comprenant:
un élément de base (3) ayant un élément supérieur et un élément inférieur, l'élément inférieur étant configuré pour être fixé à une surface interne d'un pneumatique ;
un élément de plate-forme (7) ayant un élément supérieur et élément inférieur, l'élément supérieur étant sensiblement plat et configuré comme une surface de montage pour un dispositif ;
un élément de pilier (5") ayant un élément supérieur et un élément inférieur, l'élément supérieur étant connecté à l'élément inférieur de l'élément de plate-forme (7) et l'élément inférieur étant connecté à l'élément supérieur de l'élément de base (3) ; et
un dispositif fixé à l'élément supérieur de l'élément de plate-forme (7), moyennant quoi le dispositif peut être découplé de phénomènes sélectionnés relatifs au pneumatique,
**caractérisé en ce que** l'élément de plate-forme (7) et l'élément de base (3) présentent chacun des sections transversales généralement rectangulaires et **en ce que** l'élément de pilier (5") présente une section transversale cruciforme.

5. Assemblage de pastille selon la revendication 4, dans lequel l'élément de base (3) est généralement rectangulaire, avec deux côtés sensiblement parallèles plus longs et deux extrémités ovales plus courtes.

6. Assemblage de pastille selon la revendication 4, dans lequel l'élément de base (3) présente des bords extérieurs (9) biseautés à partir de l'élément supérieur de l'élément de base (3).

7. Assemblage de pastille selon la revendication 4, dans lequel le dispositif comprend :
un circuit imprimé (22) ayant un élément supérieur et un élément inférieur ;
au moins un composant électrique sélectionné (24, 26) fixé à l'élément supérieur du circuit imprimé (22) ; et
un matériau de revêtement enrobant (28, 28') qui enveloppe le circuit imprimé (22) et tous les composants électriques (24, 26) qui y sont montés.

8. Assemblage de pastille selon la revendication 7, dans lequel le matériau de revêtement enrobant (28, 28') est un matériau de surmoulage rigide (28) et dans lequel le dispositif est collé à l'élément supérieur de la plate-forme (7).

9. Assemblage de pastille selon la revendication 8, dans lequel les contours de l'élément de plate-forme (7) correspondent aux contours du dispositif.

10. Assemblage de pastille selon la revendication 4, dans lequel le dispositif comprend :
une demi-coque rigide (30) ayant un élément supérieur ouvert (32), des éléments latéraux (34, 34') et un élément inférieur fermé (36) ;
un circuit imprimé (22) ayant un élément supérieur, un élément inférieur et au moins un composant électrique sélectionné (24, 26) fixé à l'élément supérieur du circuit imprimé (22), ledit circuit imprimé (22) étant positionné à l'intérieur de la demi-coque rigide (30) ; et
un matériau de revêtement enrobant (28, 28') qui scelle ledit circuit imprimé (22) et ledit au moins un composant électrique sélectionné (24, 26) à l'intérieur de la demi-coque rigide (30) ;
dans lequel l'élément inférieur (36) de la demi-coque rigide (30) est collé à l'élément supérieur de l'élément de plate-forme (7) de la pastille de pneumatique (1).

11. Assemblage de pneumatique à dispositifs intégrés, comprenant :
un pneumatique ;
une pastille de pneumatique (1) comprenant :
un élément de base (3) ayant un élément supérieur et un élément inférieur, l'élément inférieur étant fixé à une surface interne dudit pneumatique ;
un élément de plate-forme (7) ayant un élément supérieur et un élément inférieur, l'élément supérieur étant sensiblement plat et configuré comme une surface de montage pour un dispositif ; et
un élément de pilier (5") ayant un élément supérieur et un élément inférieur, l'élément supérieur étant connecté à l'élément inférieur de l'élément de plate-forme (7) et l'élément inférieur étant connecté à l'élément supérieur de l'élément de base (3) ; et
un dispositif, ledit dispositif étant fixé à l'élément supérieur de l'élément de plate-forme (7) de ladite pastille de pneumatique (1), moyennant quoi le dispositif peut être découplé de phénomènes sélectionnés relatifs au pneumatique,
**caractérisé en ce que** l'élément de base (3) est généralement rectangulaire, avec deux côtés sensiblement parallèles plus longs et deux extrémités arrondies plus courtes et **en ce que** l'élément de pilier (5") présente une section transversale rectangulaire.

12. Assemblage de pneumatique selon la revendication 11, dans lequel l'élément de base (3) présente des bords extérieurs (9) biseautés à partir de l'élément supérieur de l'élément de base (3).

13. Assemblage de pneumatique selon la revendication 11, dans lequel le dispositif comprend :
un circuit imprimé (22) ayant un élément supérieur et un élément inférieur ; et
au moins un composant électrique sélectionné (24, 26) fixé à l'élément supérieur du circuit imprimé (22), dans lequel l'élément inférieur du circuit imprimé (22) est collé à l'élément supérieur de l'élément de plate-forme (7) de la pastille de pneumatique (1).

14. Assemblage de pneumatique selon la revendication 13, comprenant en outre un matériau de revêtement enrobant (28, 28') recouvrant l'élément supérieur du circuit imprimé (22), tous les composants électriques (24, 26) qui y sont assemblés et au moins une partie de l'élément inférieur de l'élément de plate-forme (7), constituant ainsi une encapsulation étanche du dispositif.

15. Assemblage de pneumatique selon la revendication 11, dans lequel le dispositif comprend :
un circuit imprimé (22) ayant un élément supérieur et un élément inférieur ;
au moins un composant électrique sélectionné (24, 26) fixé à l'élément supérieur du circuit imprimé (22) ; et
un matériau de revêtement enrobant (28, 28') qui enveloppe le circuit imprimé (22) et tous les composants électriques (24, 26) qui y sont montés.

16. Assemblage de pneumatique selon la revendication 15, dans lequel le matériau de revêtement enrobant (28, 28') est un matériau de surmoulage rigide (28) et le dispositif est collé à l'élément supérieur de la plate-forme (7).

17. Assemblage de pneumatique selon la revendication 16, dans lequel les contours de l'élément de plate-forme (7) correspondent aux contours du dispositif.

18. Procédé de montage d'un dispositif à l'intérieur d'un pneumatique, comprenant les étapes consistant à :
fournir un pneumatique ;
fournir un dispositif ;
fournir une pastille de pneumatique (1) ayant un élément de plate-forme (7) présentant une surface supérieure plane et une surface inférieure, un élément de base (3) présentant une surface inférieure plane et une surface supérieure, et un élément de pilier (5") ayant un élément supérieur et un élément inférieur qui connecte l'élément de plate-forme (7) à l'élément de base (3) et configuré pour découpler de la plate-forme (7) certains phénomènes sélectionnés relatifs au pneumatique ;
fixer le dispositif à l'élément supérieur de l'élément de plate-forme (7) de la pastille de pneumatique (1) ; et
attacher la surface inférieure de l'élément de base (3) de la pastille de pneumatique (1) à une surface interne du pneumatique
**caractérisé en ce que** l'étape qui consiste à fournir une pastille de pneumatique (1) comprend l'agencement d'une section transversale généralement rectangulaire pour l'élément de plate-forme (7) et pour l'élément de base (3), et **en ce que** l'étape qui consiste à fournir une pastille de pneumatique (1) comprend l'agencement d'une section transversale cruciforme pour l'élément de pilier (5").

19. Procédé selon la revendication 18, dans lequel l'étape qui consiste à fournir une pastille de pneumatique (1) comprend l'agencement d'une section transversale généralement rectangulaire pour l'élément de base (3), avec deux côtés sensiblement parallèles plus longs et deux extrémités ovales plus courtes.

20. Procédé selon la revendication 18, dans lequel l'étape qui consiste à fournir une pastille de pneumatique (1) comprend une étape qui consiste à fournir à l'élément de base (3) des bords extérieurs (9) biseautés à partir de l'élément supérieur de l'élément de base (3).

21. Procédé selon la revendication 18, dans lequel l'étape qui consiste à fournir un dispositif comprend les étapes qui consistent à :
fournir un circuit imprimé (22) ayant un élément supérieur et un élément inférieur ; et
fixer au moins un composant électrique sélectionné (24, 26) à l'élément supérieur du circuit imprimé (22).

22. Procédé selon la revendication 21, dans lequel l'étape qui consiste à fixer le dispositif comprend l'étape qui consiste à coller l'élément inférieur du circuit imprimé (22) à l'élément supérieur de l'élément de plate-forme (7) de la pastille de pneumatique (1).

23. Procédé selon la revendication 22, dans lequel l'étape qui consiste à fixer le dispositif comprend en outre l'étape qui consiste à appliquer un matériau de revêtement enrobant (28, 28') au circuit imprimé (22), à tous les composants électriques (24, 26) qui y sont assemblés et à au moins une partie du côté inférieur de l'élément de plate-forme (7).

24. Procédé selon la revendication 21, dans lequel l'étape qui consiste à fournir un dispositif comprend en outre l'étape qui consiste à appliquer un matériau de revêtement enrobant (28, 28') recouvrant l'élément supérieur du circuit imprimé (22), tous les composants électriques (24, 26) qui y sont assemblés et l'élément inférieur du circuit imprimé (22).

25. Procédé selon la revendication 18, dans lequel l'étape qui consiste à fournir un dispositif comprend les étapes qui consistent à :
fournir une demi-coque rigide (30) ayant un élément supérieur ouvert (32), des éléments latéraux (34, 34') et un élément inférieur fermé (36) ;
fournir un circuit imprimé (22) ayant un élément supérieur, un élément inférieur et au moins un composant électrique sélectionné (24, 26) fixé à l'élément supérieur du circuit imprimé (22) ;
positionner ledit circuit imprimé (22) à l'intérieur de la demi-coque rigide (30) ; et
appliquer un matériau de revêtement enrobant (28, 28') qui scelle ledit circuit imprimé (22) et ledit au moins un composant électrique sélectionné (24, 26) à l'intérieur de la demi-coque rigide (30).

26. Procédé selon la revendication 18, dans lequel l'étape qui consiste à fixer le dispositif à l'élément supérieur de la plate-forme (7) précède l'étape qui consiste à attacher la surface inférieure de l'élément de base (3) de la pastille de pneumatique (1) à une surface interne du pneumatique.

27. Procédé selon la revendication 18, dans lequel l'étape qui consiste à attacher la surface inférieure de l'élément de base (3) de la pastille de pneumatique (1) à une surface interne du pneumatique précède l'étape qui consiste à attacher le dispositif à l'élément de base (3) de la pastille de pneumatique (1).
